# EUROPEAN PATENT APPLICATION

(11) **EP 4 159 026 A1**
(43) Date of publication of application: **05.04.2023**
(21) Application number: 22180213.5
(22) Date of filing: 21.06.2022
(51) Int. Cl.: A01F 7/04, A01F 12/18, A01F 12/32

(54) **A THRESHING UNIT FOR A COMBINE HARVESTER, AND A COMBINE HARVESTER USING THE SAME**

(30) Priority: 29.09.2021 GB 202113928
(71) Applicant: AGCO International GmbH, 8212 Neuhausen am Rheinfall (CH)
(72) Inventor: COCCO, Matteo Di, 36042 Breganze (IT)
(74) Representative: AGCO Intellectual Property Department

(57) **Abstract**

The present invention relates to a threshing unit (20) for a combine harvester (10) comprising a threshing device (22, 25, 26) with one or more transverse cylinders. A driven belt (100) is provided for redirecting the crop material (110) delivered by the final cylinder (26) of the threshing device downwardly for delivery to a separator arrangement (32). This arrangement enables a grate area of one or more cylinders of th threshing device to be increased without compromising the performance of the downstream separator arrangement.

## Description

### FIELD OF THE INVENTION

This invention relates to combine harvesters, and in particular it relates to the threshing and separation unit used in a combine harvester.

### BACKGROUND OF THE INVENTION

A combine harvester typically includes a threshing unit for detaching grains of cereal from the ears of cereal, a separating apparatus downstream of the threshing unit, and a grain cleaning apparatus for receiving grain from the separating apparatus. A stratification pan (also known as a grain pan) of the separating apparatus aims to stratify the material into a layered structure of grain at the bottom and light chaff and other material other than grain (MOG) at the top. The stratification pan may be considered to be part of the separating apparatus or it may be considered to be part of the grain cleaning apparatus.

Grain which is separated along the length the separating apparatus is returned to the front of the separating apparatus by a return pan. The return pan is thus used to convey forward the crop material and distribute it across the width of the grain cleaning apparatus beneath. The grain cleaning apparatus comprises a set of sieves, the top sieve being called the chaffer.

The threshing unit delivers the threshed material to the separating apparatus, such as a straw walker system. The threshed material should be delivered to the front of the separating apparatus so that the effective separation area is maximized.

There are various designs for the threshing unit and for the separating apparatus (e.g. axial or transverse) as well as for the grain cleaning apparatus. This disclosure relates to a transverse design of the threshing unit in particular for use with a straw walker type separating apparatus.

A typical transverse design of a transverse threshing unit has a set of one or more cylinders (otherwise known as drums). As a minimum, there may be a single threshing cylinder. However, there may be one or more threshing cylinders at the front and a beater cylinder at the rear. Additional cylinders may also be used.

A problem generally with transverse threshing unit designs is that the straw is dropped too far back on the straw walkers of the separating apparatus, due to the rearward tangential velocity of the material flow. It is known to add an additional cylinder, further back than the final cylinder of the threshing unit, to redirect the flow to a more constant downward direction and hence reduce the area of the separating apparatus which is not being used. However, the additional cylinder takes up additional space and it has to be positioned in a specific location with little design freedom in order to avoid wrapping on the last cylinder of the threshing unit and to optimize the crop flow.

There is a need for a better way to improve the transfer of material from the threshing unit to the separating apparatus.

### SUMMARY OF THE INVENTION

The invention is defined by the claims.

According to examples in accordance with an aspect of the invention, there is provided a threshing unit for a combine harvester, comprising:
a tangential-flow threshing device comprising at least a tangential-flow threshing cylinder, with a transverse rotation axis, spaced from a concave surface, the threshing cylinder being adapted to receive cut crop material; and
a driven belt for redirecting the crop material delivered by the threshing device downwardly for delivery to a separator arrangement.

Thus, the term "threshing device" is used to denote the set of one or cylinders, and the term "threshing unit" additionally include the belt.

This threshing unit uses a set of more or more transversely mounted cylinders (which may each be considered to be drums). To prevent the output from the final cylinder (or the single cylinder if there is only one), being dropped far back along a downstream separator arrangement, a belt is used to redirect the crop material downwardly to the beginning of the separator arrangement. This enables a grate area of one or more cylinders of the threshing device to be increased without affecting the performance of the downstream separator arrangement. The operation of the separator arrangement downstream of the threshing unit is thereby optimized.

It is known to use an additional drum for this purpose. However, the use of a belt instead enables a lower weight system with lower inertia, and hence with lower power requirement. It also prevents the generation of a backflow pushing the crop material back against the outlet of the final cylinder of the threshing device.

The driven belt can be located with a greater degree of flexibility than an additional drum, with selectable location and inclination. The outlet direction from the belt (i.e. parallel to the belt movement direction) is independent of the direction of material flow onto the belt. It is also less aggressive on the crop material giving better quality, e.g., for straw. The driven shaft of the belt (which can be at any location around the belt path) can be more freely located than the driven shaft of a drum.

The driven belt for example has a width equal to or slightly greater than the width of the threshing device. Thus, it directs all of the crop material delivered by the threshing device.

The driven belt for example has a first section facing the threshing device cylinder to block a path of crop material from the threshing device, and the belt is driven to move the first section downwardly.

The belt thus redirects material having a backward velocity (i.e. to the back of the combine harvester) to a downward direction, towards the start of the separator arrangement. It thus redirects material that would otherwise land far back along the separator arrangement.

In a first example, the driven belt is formed around two rollers. Thus, it occupies a minimum space.

In a second example, the driven belt is formed around three or more rollers and comprises a second section facing downwardly, and the belt is driven to move the second section in a downstream direction.

This downstream direction is generally towards the back of the combine harvester. In this way, a channel is formed between the separator arrangement and the second section of the driven belt, and this increases the transportation of crop material by the separator arrangement.

The driven belt for example comprises a set of paddles extending across the belt width. The driven belt may also comprise a set of protruding fingers extending from the belt.

In combination, paddles and fingers can increase an agitation effect, thus contributing to the separation.

The threshing device may further comprises a tangential-flow beater cylinder, with a transverse rotation axis, downstream of the threshing cylinder. Thus, there is one or more threshing cylinders and a beater cylinder. There may be additional cylinders, and the threshing device may for example comprise a set of exactly three cylinders. This is one known configuration of threshing unit.

The invention also provides a threshing and separating system for a combine harvester, comprising:
the threshing unit as defined above; and
a separator arrangement downstream of the threshing unit.

The separator arrangement for example comprises a straw walker system.

The invention also provides a combine harvester comprising:
a crop cutting head; and
the threshing and separating system defined above.

The threshing and separating system may further comprise:
a return pan;
a grain pan for receiving the harvested crop material from a front end of the return pan;
a fan; and
a sieve arrangement for receiving the harvested crop material from a rear end of the grain pan.

The sieve arrangement for example comprises:
a chaffer sieve for conveying harvested crop material in a generally rearward direction; and
a lower sieve,
and wherein the threshing and separating system comprises a clean grain chute below the lower sieve.

These and other aspects of the invention will be apparent from and elucidated with reference to the embodiments) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a combine harvester which may be adapted in accordance with the invention;
Fig. 2 shows the threshing unit, separating device and grain cleaning apparatus in more detail;
Fig. 3 shows a problem with the known threshing unit of Fig. 2;
Fig. 4 shows the effect of increasing a size of the a grate of the final cylinder of the threshing unit;
Fig. 5 shows a known approach of using an additional (fourth in this example) cylinder;
Fig. 6 shows a first example of a belt;
Fig. 7 shows the belt of Fig. 6 applied to a three-cylinder threshing unit;
Fig. 8 shows a second example of a belt; and
Fig. 9 shows the belt of Fig. 8 applied to a three-cylinder threshing unit.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a threshing unit for a combine harvester, which comprises a threshing device with one or more transverse threshing cylinders. A driven belt is provided for redirecting the crop material delivered by the final cylinder of the threshing device downwardly for delivery to a separator arrangement.

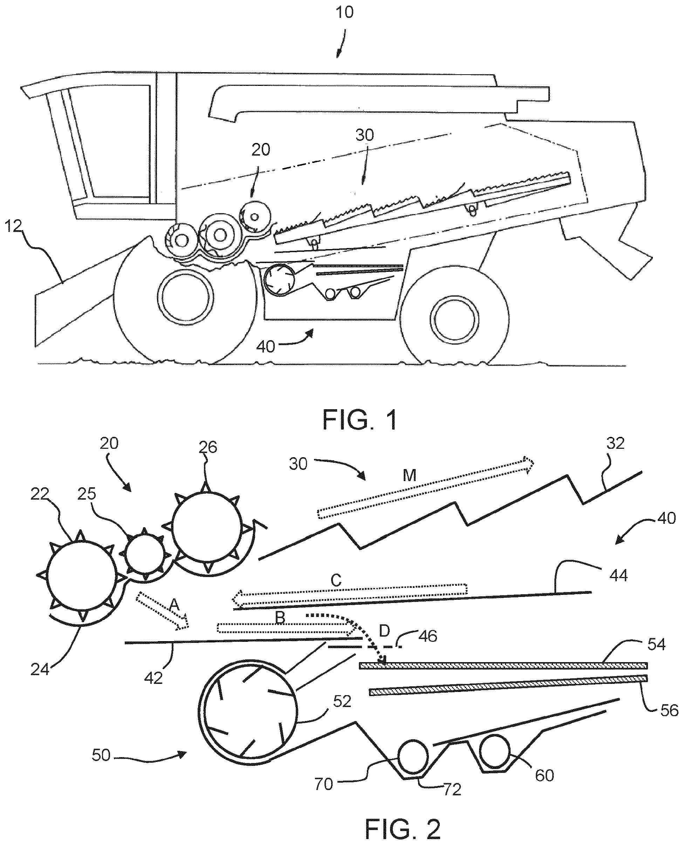

Fig. 1 shows a known combine harvester 10 to which the invention may be applied. The combine harvester includes a threshing unit 20 for detaching grains of cereal from the ears of cereal, and a separating apparatus 30 which is connected downstream of the threshing unit 20. The grains after separation by the separating device 30 pass to a grain cleaning apparatus 40.

The combine harvester has a front elevator housing 12 at the front of the machine for attachment of a crop cutting head (known as the header, not shown). The header when attached serves to cut and collect the crop material as it progresses across the field, the collected crop stream being conveyed up through the elevator housing 12 into the threshing unit 20. In the example shown, the threshing unit 20 is a transverse threshing unit, i.e. formed by rotating elements with an axis of rotation in the side-to-side direction of the combine harvester and for generating a tangential flow.

The threshing unit 20, separating device 30 and grain cleaning apparatus 40 are shown in more detail in Fig. 2.

Figure 2 shows one particular design of the threshing unit. The transverse threshing unit 20 includes a rotating, tangential-flow, threshing cylinder 22 and a concave-shaped grate 24. The threshing cylinder 22 includes rasp bars (not shown) which act upon the crop stream to thresh the grain or seeds from the remaining material, the majority of the threshed grain passing through the underlying grate 24 and onto a stratification pan 42 (also known as the grain pan), which for convenience is in this disclosure considered to be part of the grain cleaning apparatus 40.

The threshing unit 20 also comprises a beater cylinder 25 (also with a transverse rotation axis and creating a tangential flow), downstream of the threshing cylinder and a tangential-flow multi-crop separator cylinder 26 (also with a transverse rotation axis and creating a tangential flow) downstream of the beater cylinder 25.

The threshing unit 20 shown in this example thus has a well-known set of three transversely mounted rollers and cylinders (otherwise known as drums), which together may be considered to comprise a threshing device. However, the invention is applicable more generally to any transverse rotation (and hence tangential flow) threshing unit.

The remainder of the crop material including straw, tailings and un-threshed grain are passed from the threshing unit 20 into the separating apparatus 30 as shown by arrow M.

The separating apparatus 30 includes a plurality of parallel, longitudinally-aligned, straw walkers 32.

The separating apparatus 30 serves to separate further grain from the crop stream, and this separated grain passes through a grate-like structure onto an underlying return pan 44. The residue crop material, predominantly made up of straw, exits the machine at the rear. Although not shown in Fig. 1, a straw spreader and/or chopper may be provided to process the straw material as required.

The threshing apparatus 20 and separating apparatus 30 do not remove all material other than grain, "MOG", from the grain so that the crop stream collected by the stratification pan 42 and return pan 44 typically includes a proportion of straw, chaff, tailings and other unwanted material such as weed seeds, bugs, and tree twigs. The remainder of the grain cleaning apparatus 40 (i.e. a grain cleaning unit 50) is provided to remove this unwanted material thus leaving a clean sample of grain to be delivered to the tank.

For clarity, the term 'grain cleaning apparatus' is intended to include the stratification pan 42, the return pan 44 and other parts which form the grain cleaning unit 50 (also known as a cleaning shoe).

The grain cleaning unit 50 also comprises a fan unit 52 and sieves 54 and 56. The upper sieve 54 is known as the chaffer.

The stratification pan 42 and return pan 44 are driven in an oscillating manner to convey the grain and MOG accordingly. Although the drive and mounting mechanisms for the stratification pan 42 and return pan 44 are not shown, it should be appreciated that this aspect is well known in the art of combine harvesters and is not critical to disclosure of the invention. Furthermore, it should be appreciated that the two pans 42, 44 may take a ridged construction as is known in the art.

The grain passing through concave grate 24 falls onto the front of the stratification pan 42 as indicated by arrow A in Fig. 2. This material is conveyed rearwardly (in the direction of arrow B in Fig. 2) by the oscillating motion of the stratification pan 42 and the ridged construction thereof. Material passing through the grate of the separator apparatus 30 falls onto the return pan 44 and is conveyed forwardly by the oscillating motion and ridged construction thereof as shown by arrow C.

It is noted that "forwardly" and "rearwardly" refer to direction relative to the normal forward direction of travel of the combine harvester.

When the material reaches a front edge of the return pan 44 it falls onto the stratification pan 42 and on top of the material conveyed from the threshing unit 20 as indicated by arrow B.

The combined crop streams thus progress rearwardly towards a rear edge of the stratification pan 42. Whilst conveyed across the stratification pan 42, the crop stream, including grain and MOG, undergoes stratification wherein the heavier grain sinks to the bottom layers adjacent stratification pan 42 and the lighter and/or larger MOG rises to the top layers.

Upon reaching the rear edge of the stratification pan 42, the crop stream falls onto the chaffer 54 which is also driven in a fore-and-aft oscillating motion. The chaffer 54 is of a known construction and includes a series of transverse ribs or louvers which create open channels or gaps therebetween. The chaffer ribs are angled upwardly and rearwardly so as to encourage MOG rearwardly whilst allowing the heavier grain to pass through the chaffer onto an underlying second sieve 56.

The chaffer 54 is coarser (with larger holes) than second sieve 56.

It is known for chaffer 54 to include an inclined rear extension section (not shown), and MOG which reaches the rear section either passes over the rear edge and out of the machine or through the associated grate before being conveyed to a returns auger 60 for re-threshing in a known manner. The majority of materials passing through the rear end of the chaffer 54 is un-threshed tailings.

Grain passing through chaffer 54 is incident on the lower sieve 56 which is also driven in an oscillating manner and serves to remove tailings from the stream of grain before being conveyed to on-board tank (not shown) by grain collecting auger 70 which resides in a transverse trough 72 at the bottom of the grain cleaning unit 50. Tailings blocked by sieve 56 are conveyed rearwardly by the oscillating motion thereof to a rear edge from where the tailings are directed to the returns auger 60 for reprocessing in a known manner.

The flow of material over the end of the stratification pan 42, shown as arrow D, is known as a cascade. It is desirable for this cascade to form a thin layer so that the airflow from the fan unit 52 is able to pass through the layer and lift the MOG away from the grains.

To assist this operation it is also known to have an additional cascade pan 46 between the stratification pan 42 and the chaffer 54. The grain and chaff then initially falls from the stratification pan 42 onto the cascade pan 46 before falling from the rear edge thereof onto the chaffer 54. The cascade pan 46 has a grid to convey long straw and weeds rearwardly and away from the cascading grain flow. The cascade pan assists the separation of grain from MOG.

In this case, fan unit 52 delivers a portion of a cleaning airstream rearwardly between the stratification pan 42 and the cascade pan 46 and another portion rearwardly between the chaffer 54 and the cascade pan 46, and between the sieves.

The fan unit 52 thus generates a cleaning air stream which is directed through the falling grain and chaff cascade. The fan 52 rotates on a transverse axis in a known manner and includes a plurality of impellor blades which draw in air from the transverse ends open to the environment and generate an air stream as explained above in a generally rearward direction. The air stream creates a pressure differential across the chaffer 54 and sieve 56 to encourage lighter MOG rearwardly and upwardly whilst allowing the grain to pass through the chaffer 54 and the sieve 56.

This disclosure relates to a design of the threshing and separation unit. In particular, it is desired to deliver the threshed material to the beginning of the separator apparatus, so that the separation is as efficient as possible.

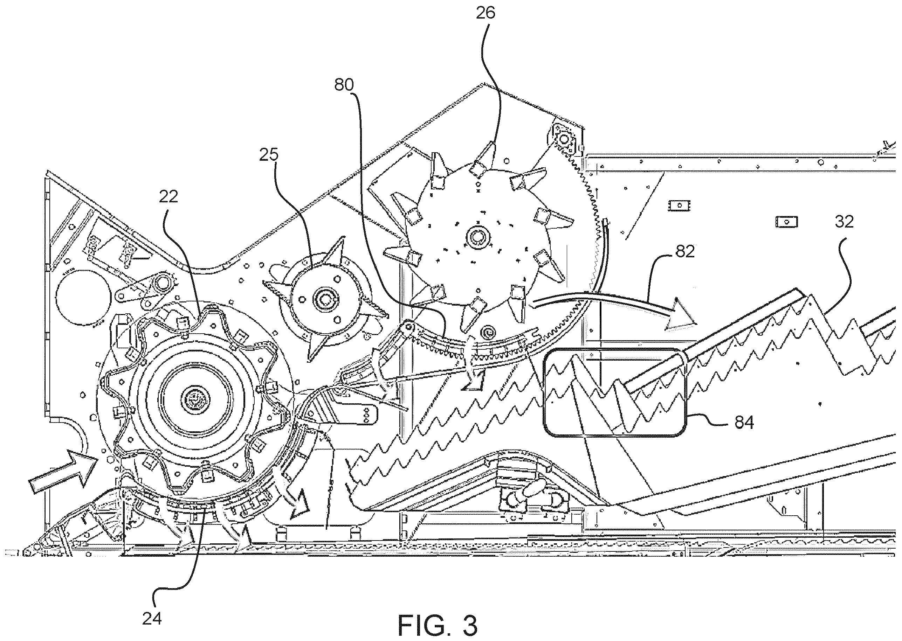

A problem with the known threshing unit of Fig. 2 is explained with reference to Fig. 3.

The final cylinder of the threshing device, in this case the multi crop separator cylinder 26, has a grate 80. Where the grate 80 ends, a flow of threshed material is delivered to the straw walkers 32. This flow is shown by arrow 82. The rearward velocity of this flow means there is an area 84 of the separator apparatus which is not used, and this reduces the separation efficiency.

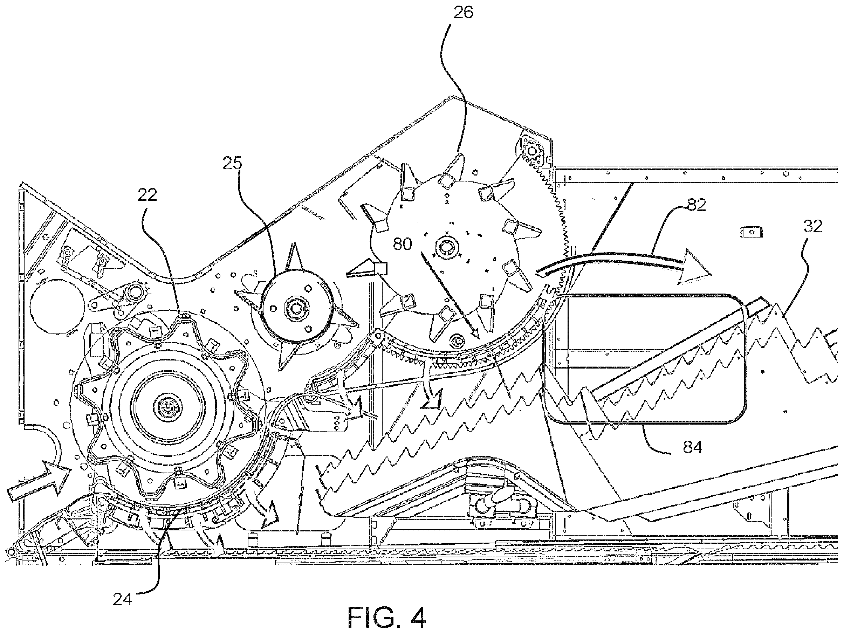

It is also desirable to increase the size of the grate 80 of the multi crop separator cylinder 26, as shown in Fig. 4. The area increase of the grate 80 improves the processor performance. However, this worsens the problem explained with reference to Fig. 3. The straw and grain flow has a different output angle from the grate output such that it is dropped even further backward, missing a larger separation area 84. This gives a reduction of performance.

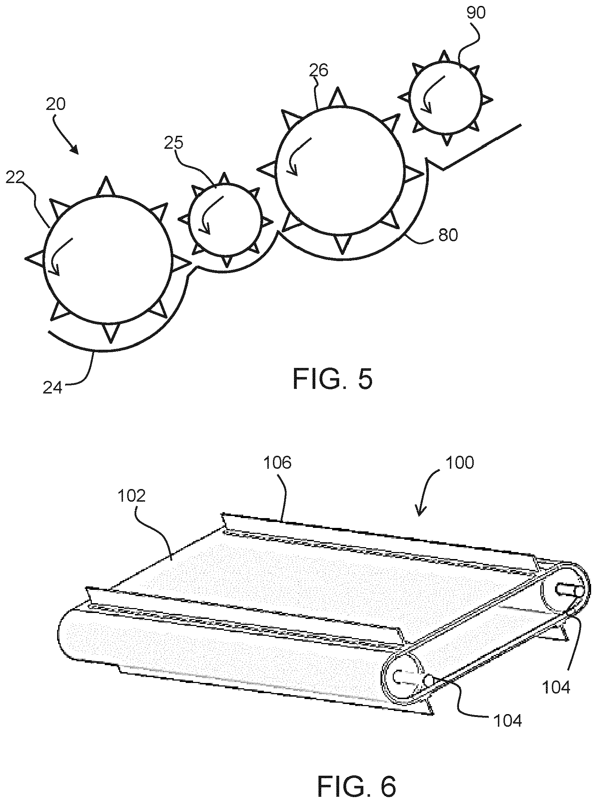

It is known to add an additional cylinder, hence a fourth cylinder 90 in this particular case, as shown in Fig. 5. This used to change the straw flow direction in order to optimize the separation area on the straw walker. It also avoids any straw accumulation in the area of the multi crop separator cylinder 26. However, the fourth cylinder 90 adds weight and inertia and it needs a precise location. It can also cause material backflow by pushing the straw towards the opening between the multi crop separator cylinder 26 and the grate 80.

This disclosure provides a threshing unit for a combine harvester based on the a transverse threshing device, for example the design explained above, thus comprising at least a tangential-flow threshing cylinder 22 (with a transverse rotation axis), spaced from a concave surface 24, and one or more additional cylinders such as a beat cylinder.

Downstream of the final cylinder of the threshing device, which in this case is the multi crop separator cylinder 26, there is a driven belt for redirecting the crop material delivered by the multi crop separator cylinder 26 downwardly for delivery to the separator arrangement, i.e. the straw walker.

A belt is used to prevent the output from the final cylinder being dropped far back along the separator arrangement, and this enables the area of the grate 80 of the final cylinder 26 to be increased without affecting the performance of the downstream separator arrangement. The operation of the separator arrangement downstream of the threshing unit is thereby optimized. The belt enables a low weight system with low inertia, and hence with lower power requirement. It also prevents the generation of a backflow pushing the crop material back against the outlet of the final cylinder of the threshing device.

The driven belt can be provided with a desired location and inclination. The outlet direction from the belt (i.e. parallel to the belt movement direction) is independent of the direction of material flow onto the belt. It is also less aggressive on the crop material giving better quality, e.g., for straw. The driven shaft of the belt can be at any location around the belt path so that it can be more freely located than the driven shaft of a drum.

The belt can be driven by any type of drive system, namely belt driven (from another rotating shaft), hydraulically driven or electrically driven.

Fig. 6 shows a first example of a belt 100, comprising a belt surface 102 formed around two rollers 104. The belt has paddles 106 to convey material, and these can have any suitable shape, dimensions, and pitch.

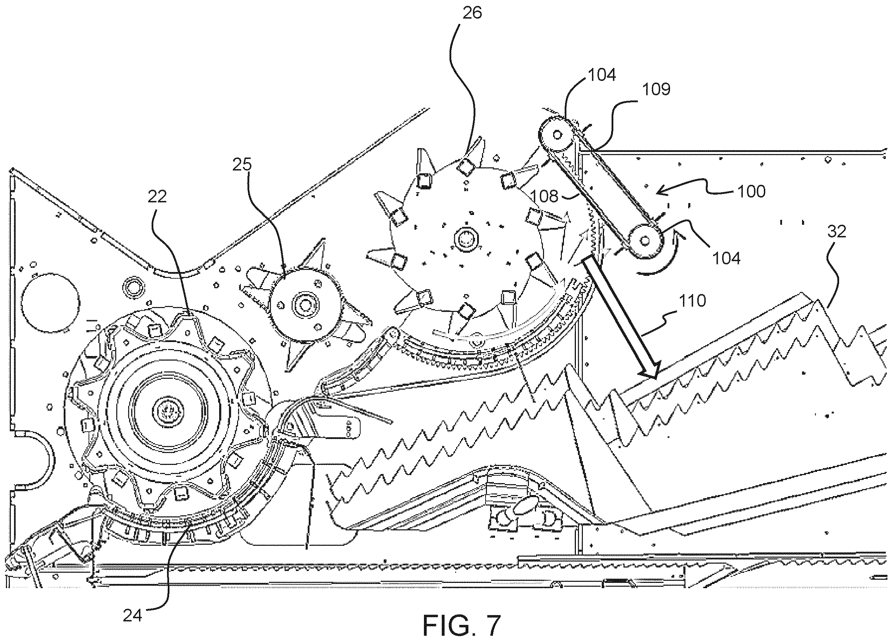

Fig. 7 shows the belt 100 of Fig. 6 applied to the three-cylinder threshing unit as described above.

The driven belt has a first section 108 facing the final cylinder of the threshing device, in this case the multi crop separator cylinder 26, to block a downstream path of crop material from the multi crop separator cylinder 26, and the belt is driven to move the 108 first section downwardly. An opposing section 109 faces away from the multi crop separator cylinder 26.

The belt 100 delivers a flow 110 directly towards the straw walker without a significant flow in the rearward direction.

The belt has a same width as the lateral width of the threshing cylinders (or it may be slightly larger to prevent flow off the edges). Thus, it directs all of the crop material delivered by the multi crop separator cylinder 26.

The belt is driven with a same or similar linear speed to the peripheral speed of the final cylinder of the threshing device.

The use of a belt is thus lighter, more flexible and allows more independent design compared to an additional, e.g. fourth, cylinder. For example, the drive shaft may be either of the two rollers 104. Independence is provided for the location as a result of the straight surface of the belt. The belt also avoids any backflow to the multi crop separator cylinder, and gives a more uniform outlet direction thereby optimizing the separation area.

The belt can be placed at a choice of distances from the final cylinder of the threshing device and with a choice of inclinations. The belt can also be mounted in a narrow space so does not occupy significant extra space.

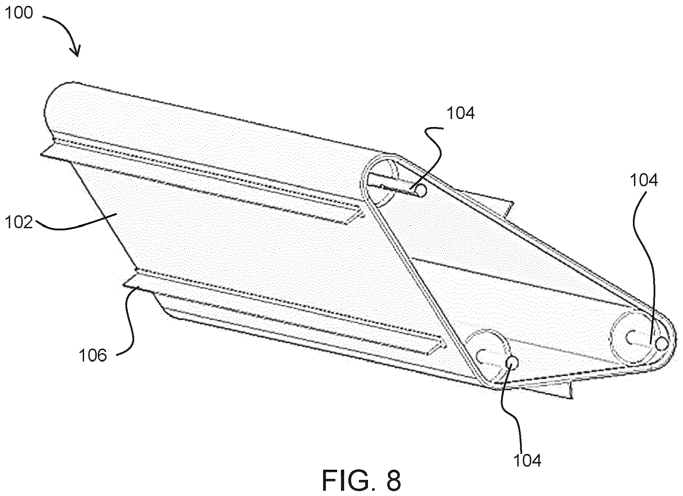

Fig. 8 shows a second example of a belt 100, again comprising a belt surface 102 but formed around three rollers 104. The belt again has paddles 106 to convey material, and these can have any suitable shape, dimensions, and pitch. There may instead be more than three rollers enabling a more shapes to be formed for fitting into the available space.

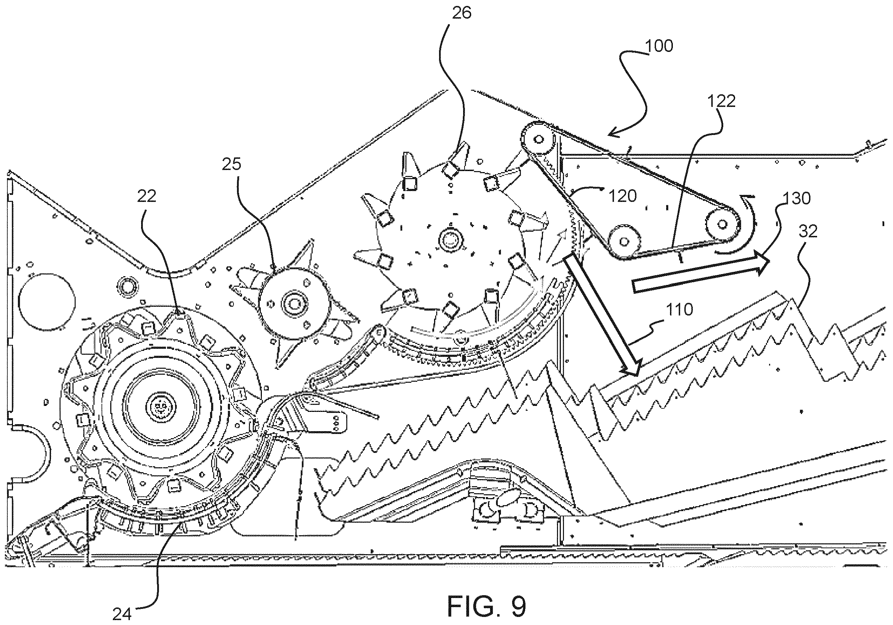

Fig. 9 shows the belt 100 of Fig. 8 applied to the three-cylinder threshing unit as described above.

The driven belt has a first section 120 facing the final cylinder 26 of the threshing device to block a downstream path of crop material from the final cylinder, and the belt is driven to move the 120 first section downwardly. A second section 122 faces downwardly towards the separator apparatus (i.e. towards the straw walker 32). The belt is driven to move the second section 122 in a downstream direction. This provides an increase of the straw transportation and agitation above the straw walker, as represented by arrow 130. In particular, a channel is formed between the separator arrangement and the second section 122 of the driven belt, and this increases the transportation of crop material by the separator arrangement.

As shown, the belt comprises a set of paddles extending across the belt width. The belt may also comprise a set of protruding fingers extending from the belt. In combination, paddles and fingers can increase an agitation effect, thus contributing to the separation. There may be fingers of different sizes and/or shapes.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A threshing unit (20) for a combine harvester, comprising:
a tangential-flow threshing device (22, 25, 26) comprising at least a tangential-flow threshing cylinder (22), with a transverse rotation axis, spaced from a concave surface (24), the threshing cylinder (22) being adapted to receive cut crop material; and
a driven belt (100) for redirecting the crop material delivered by the threshing device downwardly for delivery to a separator arrangement (30).

2. The threshing unit of claim 1, wherein the driven belt (100) has a width equal to or slightly greater than the width of the threshing device.

3. The threshing unit of claim 1 or 2, wherein the driven belt (100) has a first section (108) facing the threshing device to block a downstream path of crop material from the threshing device, and the belt is driven to move the first section (108) downwardly.

4. The threshing unit of claim 3, wherein the driven belt is formed around two rollers (104).

5. The threshing unit of claim 3, wherein the driven belt is formed around three or more rollers (104) and comprises a second section (122) facing downwardly, and the belt is driven to move the second section (122) in a downstream direction.

6. The threshing unit of any one of claims 1 to 5, wherein the driven belt comprises a set of paddles (106) extending across the belt width.

7. The threshing unit of any one of claims 1 to 6, wherein the driven belt comprises a set of protruding fingers extending from the belt.

8. The threshing unit of claim 7, wherein the protruding fingers have a plurality of different sizes and/or shapes.

9. The threshing unit of any one of claims 1 to 8, wherein the threshing device further comprises a tangential-flow beater cylinder (25), with a transverse rotation axis, downstream of the threshing cylinder (22).

10. The threshing unit of claim 9, wherein the threshing device comprises a set of three cylinders.

11. A threshing and separating system for a combine harvester, comprising:
the threshing unit (20) of any one of claims 1 to 10;
a separator arrangement (30) downstream of the threshing unit.

12. The threshing and separating system of claim 11, wherein the separator arrangement (30) comprises a straw walker system.

13. A combine harvester comprising:
a crop cutting head; and
the threshing and separating system of claim 11 or 12.

14. The combine harvester of claim 13, wherein the threshing and separating system further comprises:
a return pan (44);
a grain pan (42) for receiving the harvested crop material from a front end of the return pan;
a fan (52); and
a sieve arrangement (54,56) for receiving the harvested crop material from a rear end of the grain pan.

15. The combine harvester of claim 14, wherein the sieve arrangement comprises:
a chaffer sieve (54) for conveying harvested crop material in a generally rearward direction; and
a lower sieve (56),
and wherein the threshing and separating system comprises a clean grain chute (70) below the lower sieve.
